(19) Europäisches Patentamt
European Patent Office
Office européen des brevets

(11) **EP 2 392 904 A2**

(12) **EUROPEAN PATENT APPLICATION**

(43) Date of publication:
**07.12.2011 Bulletin 2011/49**

(51) Int Cl.:
*G01L 9/00* (2006.01)    *H03K 17/94* (2006.01)
*G06F 3/042* (2006.01)

(21) Application number: **11425148.1**

(22) Date of filing: **01.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.06.2010 IT RM20100304**

(71) Applicants:
- **Seconda Università degli Studi di Napoli**
  **81100 Caserta (IT)**
- **Natale, Ciro**
  **81100 Caserta (IT)**
- **Pirozzi, Salvatore**
  **81030 Parete (CE) (IT)**
- **D'Amore, Alberto**
  **80049 Somma Vesuviana (NA) (IT)**

- **Grassia, Luigi**
  **81030 Lusciano (CE) (IT)**

(72) Inventors:
- **De Maria, Giuseppe**
  **80134 Napoli (IT)**
- **Natale, Ciro**
  **81100 Caserta (IT)**
- **Pirozzi, Salvatore**
  **81030 Parete (CE) (IT)**
- **D'Amore, Alberto**
  **80049 Somma Vesuviana (NA) (IT)**

(74) Representative: **Iannone, Carlo Luigi et al**
  **Barzanò & Zanardo Roma S.p.A.**
  **Via Piemonte 26**
  **00187 Roma (IT)**

(54) **Sensor for measuring an external force applied to said sensor**

(57) This invention relates to a sensor comprising multiple sensing points (45), each of which comprises a light source or emitter (4) and a corresponding optical receiver (5), and a resilient deformation-liable element (3) having a reflecting lower surface facing said sensing points (45) and an upper surface facing the external environment, adapted to optically uncouple said sensing points (45) and to absorb the light radiation emitted by said light source (4) and reflected by said reflecting lower surface, wherein said sensing points (45) are at least four sensing points, at least two of which are arranged in a first row and at least two of which are arranged in a second row, and said resilient deformation-liable element (3) comprises multiple deformation-liable cells (30). Each cell contains a sensing point (45) respectively and is defined by deformation-liable walls (7) extending from said reflecting lower surface and by a deformation-liable bottom surface (6) that is a portion of said lower reflecting surface, so that, when an external force and/or a moment are applied to said sensor, the walls (7) and/or the bottom surface (6) of the cells (30) are deformed, such that, in respect of each cell, said optical receiver (5) senses a variation in the strength of the light radiation emitted by the light source (4) respectively and the sensor estimates the components of said external force and/or of said moment from the variations of the light strength of all above said cells (30).

Fig.3

## Description

This invention relates to a sensor for measuring an external force applied to said sensor and particularly relates to a sensor adapted to have a behaviour as much as possible similar to the human touch.

The application fields for such a sensor are mainly related to industrial robotics, to anthropomorphic robotics, to service robotics, to virtual reality, as well as to entertainment and to prosthetics.

More specifically, this invention relates to the construction of a sensor of the above said kind which is adapted to estimate all of the components of said external force.

At present, a number of devices do exist, but no one of said devices is capable to contemporaneously provide most of the features that are required in a tactile sensor.

In a sensor as described in EP 0 113 223, the light generated by multiple light sources reaches an optical receiver by travelling through a transparent material.

The main disadvantage consists in that, if the complete measure of a force applied to the sensor is to be obtained, it is necessary to switch on the light sources one by one by means of a multiplex polling technique, due to the fact that a single receiver is provided. Therefore, if the dimensions of the sensor are increased, the concerned measurement becomes too slow or even impossible, due to the losses occurring in the transparent material.

Furthermore, an additional disadvantage is connected with the light scattering which occurs when the light propagates through said transparent material.

In fact, as described by Akira Ishimanu in "Wave propagation and scattering in random media", Academic Press, New York, 1978, scattering is a hardly modelled stochastic phenomenon and this noticeably complicates the calibration of the sensor and above all the repeatability of the measurements.

Lastly, from an operation view point, it is substantially necessary that the distance between said light sources and said receiver be fixed and known. This entails that the electronic circuit comprising the light sources and the receiver be realised in a rigid design. The possibility to realise said electronic circuit in a flexible design is consequently excluded.

As it occurs also in an approach proposed in JP 6018216, the light travels in a transparent material, with consequently generated optical scattering phenomena, and the receiver is to be positioned at a fixed and known distance with respect to the light source. The sensor, therefore, cannot be realised in a flexible embodiment.

The approaches as proposed in JP 60195431 and JP 61041938 are very similar to each other and include a first layer provided with light sources that illuminate a reflecting surface through small holes, said small holes being realised in a second layer provided with receivers and positioned at a different height from the first layer. The reflected light is measured by the receivers of said second layer that are positioned laterally adjacent to the holes.

In both above proposed approaches, the alignment of the light sources and the related holes is substantial and, therefore, a flexible embodiment of the sensor is excluded.

In the approach as proposed in JP 61041938, the light propagates in a transparent medium and, therefore, it is disadvantageously subject to scattering phenomena.

In addition, a further disadvantage is connected with the positions of the receivers. In fact, if said receivers are too strictly spaced with respect to each other, they can be affected by light coming from multiple holes, thereby raising coupling problems between different measurement points and, as a consequence, additional difficulties in respect of the repeatability of the measurements.

The approach as proposed in WO 00/073982 is explicitly based upon measurements of diffused and/or scattered light. As already exhaustively explained in respect of the above discussed approaches, scattering is a hardly modelled stochastic phenomenon and this complicates both the calibration of the sensor and the repeatability of the measurements effected by the concerned sensor.

The approach as proposed in WO 86/003618 includes a single light source for illuminating a transparent material. The light emanating from said transparent material is measured by means of an array of sensing elements positioned under the transparent material itself, in order to reconstruct the shape of an object acting upon the sensor.

Such an approach has disadvantages connected with the light scattering phenomenon occurring in the transparent material through which the light itself propagates.

Furthermore, for sensors having large dimensions, the light generated by said light source could be not sufficient to illuminate the whole surface of the sensor, due to losses in the transparent material.

The sensor as described in WO 86/003618 includes a single source and multiple receivers that are polled according to a multiplexing technique. In this case, as in the approach as proposed in EP 0 113 223, the disadvantages are connected with any losses in the transparent material as well as with the multiplexing technique. If the dimensions of the sensor are increased, the measurement of an external force becomes too slow or even impossible, due to the losses occurring in the transparent material.

The approach as proposed in WO 09/013599 utilises a receiver array, with multiple light sources located around said receiver array and buried in a transparent material.

The use of said transparent material entails scattering related disadvantages that make the calibration of the sensor complex and reduce the measurement repeatability.

Furthermore, the presence of light sources designed to be necessarily positioned only around the receiver array does not allow a sensor having large dimensions to be realised. In fact, as the dimensions are increased, so the light radiation could not be sufficient to correctly illuminate the receiver array due to the losses in the transparent material or due to an occlusion of the light source as a consequence of the contact of the sensor with an external object.

In view of all above, the disadvantages of the above mentioned sensors are related to propagation of the light in transparent materials, which complicates the calibration and the measurement repeatability in the sensor itself, due to scattering phenomena.

In most sensors of the above kind, the light propagates in a layer of transparent material and the optical receivers are strongly coupled to one another, i.e. each receiver can receive light radiation coming from different sources. This makes it difficult to discriminate single contacts from multiple contacts, namely to discriminate those cases in which the sensor is in contact with a single object having an extended surface from those cases in which the sensor is in contact with multiple objects.

In addition, it is to be underlined that each of said sensors only estimates the normal component of the force, with respect to the surface of the concerned sensor in the contact point or the pressure in the contact point or a pressure map. Therefore, no sensor according to the inventions based upon an opto-electronic technology has the object to solve the problem to estimate all of the components of the contact force between the sensor and the external environment.

A further sensor of well known type is disclosed in United States patent 4 405 197. This sensor is comprised of cells provided with rigid walls and of an upper opening on which a deformation-liable layer is positioned. A light source and a receiver are provided facing to said deformation-liable layer.

Anyway, such sensor has some drawbacks.

A first drawback consists in that it does not allow to estimate all of the components of an external force acting upon said sensor, due to its mainly rigid construction, in addition to its deformation-liable layer. The optical receiver only senses any increase in the light radiation strength, in view of the fact that, when said external force is applied, the deformation-liable layer approaches closer to said optical receiver. In particular, the subject sensor is adapted to estimate only the orthogonal component of an external force applied to said deformation-liable layer, since only orthogonal component can cause a deformation of said deformation-liable layer. As a consequence, only in this case, the optical receiver senses a variation in the light radiation strength. On the other hand, i.e. when an external force is tangentially applied to the deformation-liable layer of the sensor, no deformation is caused in this deformation-liable layer.

A second drawback consists in that, should the contact area between an external object, by which an external force is applied to said sensor, and the sensor itself be greater than the dimension of a cell, such external force should be significantly higher with respect to the case in which the contact area between said object and said sensor is smaller than the size of a cell, in order that the deformation-liable layer be deformed and the receiver sense a variation in the light radiation strength.

A further sensor of well known type is disclosed in European Patent EP 0 558 871. Said sensor is comprised of cells having rigid walls covered by a resilient membrane. A light source and a receiver are included in said cells, positioned in a respective housing therein.

Anyway, such sensor has some drawbacks.

A first drawback consists in that said sensor is adapted to estimate only the orthogonal component of a force externally applied to said resilient membrane, since the walls of the cells are rigid and only the resilient membrane is deformed when it is subjected to an external force. As a consequence thereof, when an external force is applied, said resilient membrane approaches closer to the receiver which in turn senses an increase in the radiation strength, regardless of the direction of the force externally applied to said sensor.

A further drawback is due to the structural complexity of the sensor, that necessarily includes two discrete housings for the light source and for the optical receiver, respectively.

A further sensor of well known type is disclosed in patent DE 102 33 512. Said sensor is comprised of multiple cells, spaced apart with respect to each other, each of which includes a light source and a receiver, as well as a spring, internally housed therein.

Anyway, such sensor has some drawbacks, as well.

A first drawback consists in that it is not possible to estimate all of the components of an external force, since said cells operate independently of one another. In other words, each cell operates as if it were an independent sensor. Therefore, the sensor according to this invention is only adapted to estimate the orthogonal component of an external force applied to a single cell.

A further drawback is related to the structural complexity of the individual cells, each of which should internally include a spring, and to the consequently caused costs.

A further sensor of well known type is disclosed in patent EP 2 034 287. Said sensor is comprised of one or more light sources and of one or more integrated circuits on a substrate, as well as of an opto-mechanical layer substantially shaped as a hemispherical cup and attached upon said substrate so as to define a pocket. Said opto-mechanical layer has suitable optical properties so as to reflect the light radiation emitted by said light source and suitable mechanical properties so as to be deformed when an external force is applied.

Should said sensor include a light source and a receiver, when an external force is applied and the opto-mechanical layer is deformed, i.e. squeezed toward said light source and said receiver, the distance between said opto-mechanical layer and said light source and/or said receiver decreases.

A drawback consists in that the deformation of said opto-mechanical layer allows the receiver only to sense an increase in the light radiation strength. Additionally, the amount of said deformation is not dependent on whether the external force is normal or tangential to the sensor. The mechanical properties and the shape of the opto-mechanical layer are such that it will be hard to distinguish any effect due to an external force acting on the sensor in orthogonal direction with respect to the effects due to an external force acting on the sensor in tangential direction. In particular, the pocket is deformed in similar ways both when an orthogonal external force and when a tangential external force is applied thereto. In both cases, the receiver only senses an increase in the light radiation strength with respect to the case when no force is applied to the sensor. In connection with each pocket, the concerned sensor only measures the overall deformation of the pocket, but it does not measure the variation in the distance between the emitter-receiver pair and said opto-mechanical layer. Therefore, the sensor is not adapted to distinguish whether it is subjected to an orthogonal or to a tangential external force and, as a consequence hereof, it is not capable to estimate the components of said external force. This sensor is only adapted to sense an external force and to eventually estimate its strength, but it is not capable to detect its direction.

When the direction of the external force is to be estimated, it is necessary that the sensor include multiple receivers within the same cell and that the opto-mechanical layer be modified so as to be made partially reflecting. The addition of further receivers within a single cell and the changes to be made to the opto-mechanical layer complicate the construction of the sensor and make the sensor expensive as a whole.

A further sensor of well known type is disclosed in patent DE 31 46 152. This sensor is comprised of multiple cells spaced apart from one another, each of which includes a light source and a receiver and can also include a mechanical spring. Each cell operates as if it were an independent sensor.

A drawback consists in that said sensor is only adapted to sense whether an external force has been applied, but it is not capable to estimate any component of said external force.

A further drawback is due to the structural complexity of the individual cells, when each cell is designed so as to internally include a spring, as well as to the manufacturing costs thereof.

It is an object of this invention is to overcome the above said drawbacks and to provide a sensor adapted to estimate all of the components of an external force applied to said sensor, so as to permit the strength of said external force and/or its direction to be estimated.

It is a further object of this invention to provide a sensor adapted to estimate the moments that an external object placed in contact with said sensor exerts on the sensor itself along all spatial directions.

It is yet another object of this invention to provide a sensor adapted to estimate the contact point and/or the contact area between said sensor and an external object.

It a further object of this invention to provide a sensor adapted to discriminate between a single contact and multiple contacts.

It is yet a further object of this invention to provide a sensor adapted to sense whether a drift occurred or not between said sensor and an external object which is in contact with said sensor.

All above has been achieved by means of a sensor implementing most of the typical capabilities of the human touch.

It is therefore specific subject-matter of this invention a sensor comprising multiple sensing points, each of which comprises a light source or emitter and a corresponding optical receiver, and a resilient deformation-liable element having a reflecting lower surface facing said sensing points and an upper surface facing the external environment, adapted to optically uncouple said sensing points and to absorb the light radiation emitted by said light source and reflected by said reflecting lower surface, wherein said sensing points are at least four, at least two of which are arranged in a first row and at least two of which are arranged in a second row, and in that said resilient deformation-liable element comprises multiple deformation-liable cells, each of which contains a sensing point respectively and is defined by deformation-liable walls extending from said reflecting lower surface and by a deformation-liable bottom surface that is a portion of said lower reflecting surface, so that, when an external force and/or a moment are applied to said sensor, the walls and/or the bottom surface of the cells are deformed, such that, in respect of each cell, said optical receiver senses a variation in the strength of the light radiation emitted by the light source respectively and the sensor estimates the components of said external force and/or of said moment from the variations of the light strength of all above said cells.

To the purposes of this invention, the term light source should be construed as to include any emitter of electromagnetic waves that can be received by a receiver and therefore it is not to be limited to the radiation visible by human eyes.

According to this invention, each of said cells preferably has an inverted "U" shaped cross section, consisting of two vertical sides and of a horizontal side, wherein each vertical side is orthogonal to the horizontal side.

Again according to this invention, said multiple sensing points can be arranged in an array.

In particular, each light source can be placed side by side to the corresponding optical receiver or it can be placed at such a distance from the corresponding optical receiver that it is at most equal to 50% the sum of the largest dimensions of the light source and of the receiver.

Moreover, the sensing points are realised by an opto-electronic technology and they can be discrete elements positioned on a support or they can be realised as a single integrated electronic circuit, namely with the sensing points integrated in a support. Said support can realised by silicon electronic technologies or different technologies, for instance on gallium arsenide, organic as well as biologic electronics.

Advantageously, the walls of said cells can have a colour and a thickness such as to optically insulate each sensing point.

Preferably, the reflecting lower surface of said resilient deformation-liable element is realised in white silicone.

Again according to this invention, the sensor can comprise a further element, to be interposed between said sensing points and said resilient deformation-liable element, that co-operates with said resilient deformation-liable element in optically insulating said sensing points and in absorbing the light radiation emitted by said light source and reflected by said reflecting lower surface. Said further element is provided with an opening or window for each of said sensing points in order to permit said sensing points to pass there through.

According to the application of the sensor, said further element can be is rigid, preferably made of resin, or flexible, preferably made of silicone.

Lastly, according to this invention, said further element can be dull black coloured.

This invention will be now described, by way of illustration, not by way of limitation, according to an embodiment thereof, by particularly referring to the annexed drawings, in which:

Figure 1 is an exploded view of an embodiment of the sensor according to this invention, comprising three layers, a first layer having a sensing points array, a second layer and a third layer having multiple cells arranged on the lower surface;

Figure 2 is a perspective view showing a detail of the third layer of the sensor, relating to the cells of its lower surface;

Figure 3 is a cross-section view of the sensor, as it appears when it is not subjected to any external force;

Figure 4A is a cross-section view of the sensor of Figure 3 undergoing a deformation due to application of an external force;

Figure 4B is a cross-section view of the sensor of Figure 3 undergoing a deformation due to application of an external force orthogonal to the sensor;

Figure 5 shows a variation of the third layer of the sensor intended for anthropomorphic robotics applications;

Figures 6A-6R show the deformation amounts of the sensor connected with the deformations of the individual cells of the sensor, when only a normal force acts on the above said sensor;

Figures 7A-7R show the deformation amounts of the sensor connected with the deformations of the individual cells of the sensor, when only a tangential force acts on the above said sensor;

Figure 8 schematically shows the cells of Figure 3 as numbered in a reference system;

Figure 9 shows the voltage variations of a sensing point undergoing at first positive variations and then negative variations;

Figures 10A-10B show the experimental results for the estimation of the contact point on which the force is applied to the sensor, as obtained by exploitation of two estimation methods, respectively;

Figures 11-12 show the experimental results of a calibration step performed in connection with the upper surface of the third layer of the sensor, by subjecting said sensor only to forces perpendicularly applied to said sensor;

Figures 13-16 show the experimental results obtained by means of a calibration step performed within the central area of the sensor, by subjecting said sensor only to forces having perpendicular and tangential components to the sensor itself.

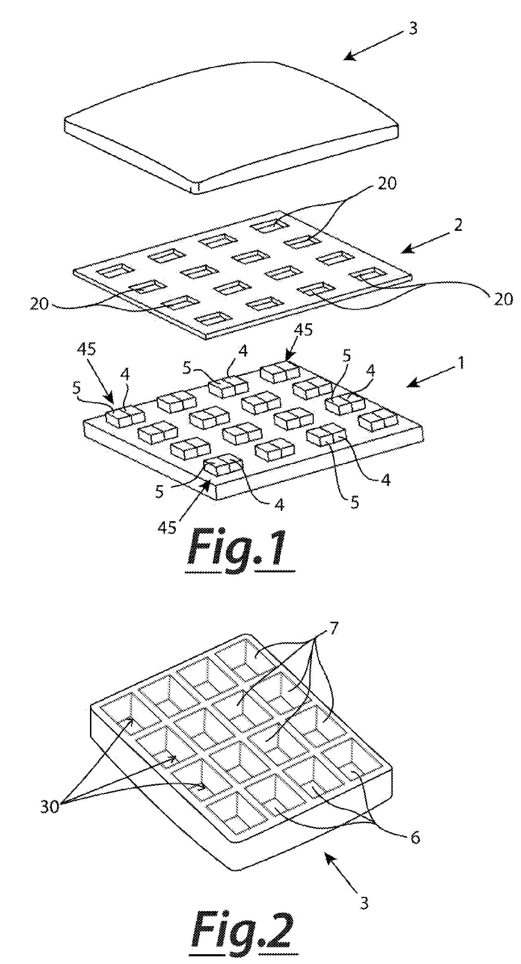

By referring particularly to Figure 1, the sensor as herein described comprises three layers superimposed to one another as follows:

- a first or sensing layer 1 comprising multiple sensing points 45 arranged on multiple rows, each of which comprises a light source or emitter 4 and an optical receiver 5, placed beside said light source 4,
- a third layer 3, liable to be resiliently deformed, having a lower reflecting surface and an upper surface facing the external environment, adapted to optically uncouple said sensing points 45 from one another and to absorb the light radiation that, upon being emitted by said light source 4, is reflected by said reflecting lower surface, and
- a second rigid layer 2, interposed between said first and third layer, that co-operates with said third layer 3 in optically uncoupling said sensing points 45 from one another and in absorbing said light radiation.

Aiming at estimating the components of said external force applied to the sensor, said sensing points 45 are in a number of at least four, at least two of which are arranged in a first row and at least two of which are arranged in a second row. Since the components of a force in spatial reference systems are three and they are independent of one another, the estimation thereof requires a number of information elements higher than the number of the variables to be estimated, namely the force components.

The rows should be at least two, in order to allow the two components laying on the same plane on which said sensing points 45 are arranged to be sensed.

Advantageously, all of the components of said external force are contemporaneously sensed.

In the hereby described exemplary implementation, the rows according to which said sensing points are arranged are parallel, but said sensing points can also be arranged according to non-parallel rows, without departing from the protection scope of this invention.

As above said, even if it is not shown in the Figures, it is not necessary that the light source 4 and the optical receiver 5 be arranged side by side, but it is sufficient that they be spaced apart at a distance from one another, such that it is at most equal to 50% the sum of the greatest dimensions of the concerned light source 4 and of the receiver 5.

In the herein described embodiment, said sensing points 45 form a 4 x 4 array and therefore these sensing points are in number of sixteen and are arranged as four rows and four columns.

As above said, even if said sensing points 45 are realised as discrete components, in such embodiment, it is possible to envision that said sensing points be integrated in said first layer 1.

The second rigid layer is provided with multiple openings or windows 20, in a number equal as the number of the sensing points 45 of the first layer 1, in order to allow the sensing points 45 to pass there through when said second layer is superposed to the first layer 1.

As above said, even if the second layer 2 is rigid in the above described exemplary implementation, it is also possible to envisage it as flexible, without departing from the protection scope of this invention.

When the second layer 2 is superimposed to the first layer 1, the concerned sensing points 45 are optically insulated from one another and so they do not interact with one another during the measurement step of the light radiation strength.

Aiming at optically uncoupling two strictly spaced apart sensing points 45 and at absorbing the light radiation, said second layer 2 ought to have suitable colour and thickness.

The light source 4 and the optical receiver 5 types and consequently the wave length and the colour of said second layer 2 are selected according to the application which the sensor is intended for.

As a consequence, it is possible to establish the thickness needed for said second layer.

As already above said, the second layer 2 can be flexible rather than rigid, according to the application which the sensor is intended for.

The third resiliently deformation-liable layer 3 is superimposed to the second layer 2, such that it covers the array of said sensing points 45 and forms an interface between the sensor and the external environment.

As it is shown in Figure 2, the lower surface of said third layer 3 is divided into multiple deformation-liable cells 30, each of which has an inverted "U" shaped cross-section, with two vertical sides and a horizontal side, wherein each vertical side is orthogonal to the horizontal side, so that, when the third layer 3 is positioned upon the second layer 2, each cell 30 is placed in front of a corresponding sensing point 45 of the first layer 1.

In other words, the bottom surface 6 of each cell 30 is facing a respective sensing point 45.

It is now apparent that the number of said cells 30 should be the same as the number of the sensing points 45 of the first layer 1 and each of said cells 30 has a reflecting bottom surface 6, said reflecting bottom surface 6 of each cell 30 being a portion of said lower reflecting surface of the third layer 3.

It is also apparent that said cells 30 of the third layer are arranged according to a 4 x 4 array and that, therefore, sixteen cells are arranged as four rows and four columns.

The herein discussed cells 30 are defined by deformation-liable walls 7 that are designed as to guarantee an optical insulation between the cells themselves, by absorbing the light radiation incident on the walls, as well as from the bottom surface 6, that is also deformation-liable.

In view of the above, once the light radiation is emitted by each light source 4, said light radiation propagates into the corresponding superimposed cell 30 and reaches the bottom surface of said cell. Since said surface 6 is reflective, such light radiation is reflected and received by receiver 5, which, in turn, furnishes a measure of the light radiation strength.

As a matter of fact, the measure of the radiation strength, as carried out by said receiver 5, is a function of the strength of the light radiation incident on said receiver and said strength, in turn, depends on the distance separating said bottom surface 6 of each of said cells 30 from the sensing point 45.

In the light of the above explained concepts, it is convenient to underline that the light radiation reflected from the bottom surface 6 of a cell 30 should not reach the adjacent cell. Therefore, both the second layer 2 and the third layer 3 should absorb the concerned light radiation.

Moreover, said second layer 2 and said third layer 3 can be used to establish the full-scale limit of the sensor, namely to determine the maximum external force that can be sensed by the sensor. The greater is the distance between the sensing points 45 and the reflecting surface of the third layer 3, the higher is the maximum external force that can be sensed by the sensor.

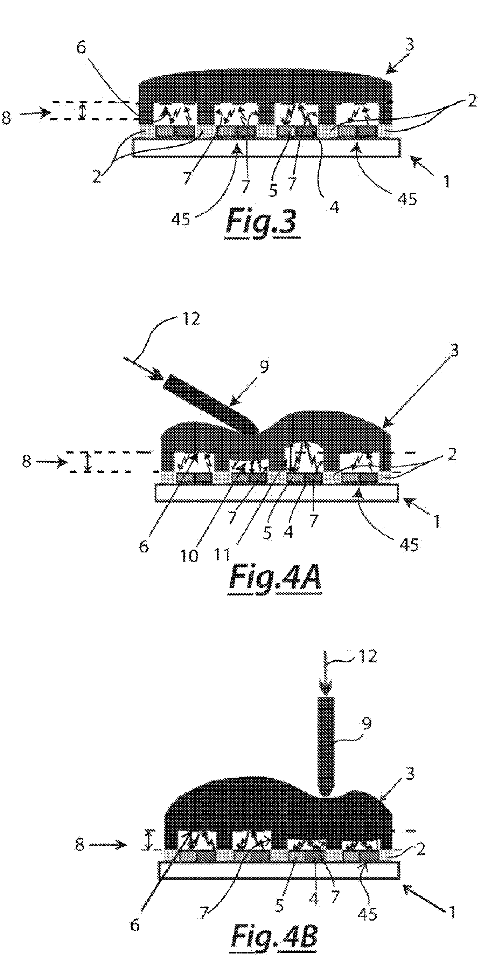

When no external force is applied to the sensor, namely it does not interact with the external environment, said bottom surface 6 of each cell 30 is placed at a starting pre-established distance 8 with respect to said sensing points 45 (Figure 3).

When an external force 12 is applied to the sensor by an element 9 contacting said third layer 3, said sensor is deformed (Figures 4A, 4B).

In fact, the external force 12 can cause a deformation of the lower reflecting surface of the sensor, which entails a local variation of the starting distance 8 separating each sensing point 45 from the bottom surface 6 of the corresponding cell and/or a deformation of the height of the walls 7, which, in turn, entails a variation of said height.

The variation of said starting distance 8 generates a variation of the light radiation reflected from each bottom surface of the cell and, as a consequence, it causes a variation of the strength as measured by the receiver of the corresponding sensing point 45 facing said surface 6.

Depending on the spatial direction of the external force 12 as applied to the sensor, the lower surface of the third layer 3 can locally get closer to or further apart from said sensing points 45.

Therefore, the starting distance 8 between each sensing point 45 of the first layer 1 and the respective bottom surface 6 of the cell 30 can be decreased or increased.

Depending on the strength of the external force and on the point to which said force is applied, also the height of the walls 7 can be increased or decreased, since they are also deformation-liable.

By exploiting the measurement of the deformation of the lower reflecting surface of the third layer 3 in a discrete number of points (as coincident with the bottom surface 6 of each cell facing the respective sensing point 45 of the first layer 1), it is possible to reconstruct the external force 12 applied to the sensor in all spatial directions, by means of identification techniques of well known type.

Figure 4A shows how the sensor is deformed when an external force having both an orthogonal component and a tangential component with respect to the sensor is applied to the sensor itself.

As it can be observed from the Figure, the distance between the bottom surface 6 of a first cell 30 and the distance between the bottom surface of a second cell 30, adjacent to the first cell, and the corresponding sensing points 45 are decreased and increased with respect to the starting distance 8, i.e. they are equalised to a first distance 10 and to a second distance 11, respectively, while the distance of other two cells 30 with respect to the corresponding sensing points 45 is unchanged, i.e. is the same as the starting distance 8.

In particular, the bottom surface 6 of said first cell 30 has moved closer to the sensing point 45 of the cell itself (such approaching is herein after identified as "negative deformation"), while the bottom surface 6 of the second cell 30 has moved away from the sensing point 45 of said cell (such removal is herein after identified as a "positive deformation").

Figure 4B illustrates how the sensor is deformed when an orthogonal external force is applied to it.

As it can be observed from the Figure, the distance between the bottom surfaces 6 of two adjacent cells 30 and the corresponding sensing points 45 is decreased with respect to the starting distance 8, while the distance between the bottom surfaces 6 of other two cells 30 is unchanged, i.e. is the same as the starting distance 8. In this specific case, only negative deformations are present.

In other words, by referring to Figures 4A and 4B, as regards each cell 30, the optical receiver 5 senses a variation in the light radiation strength emitted from the respective light source as a consequence of the variation in the height of walls 7 and/or of the variation in the distance between the bottom surface 6 of each cell 30 and the associated sensing point 45 inside thereof. The sensor estimates the components of the external force applied to it, regardless of its direction, by contemporaneously utilising the information relating to the variations in the light strength of all of the cells. In this manner, it is possible to estimate the strength of the external force as well as its direction.

It is apparent that the shape and the material of said third layer 3, i.e. the interface layer between the sensor and the external environment, should be selected so as to guarantee that the sensor be subjected to positive and/or negative deformations corresponding to the sensing points 45 as a function of all of the components of the external force 12 applied to said sensor.

The shape of the third layer 3 is determined based upon the application type for which the sensor is designed and the dimensions of the third layer are optimised by use of mathematical models taking into account the mechanical properties of the material used for its realisation.

The sensitivity of the sensor depends on the deformation amount, both the positive and the negative ones, as well as on the corresponding variations in the reflected light radiation.

The selection of a material having different mechanical properties, such as the elasticity, influences the deformation amounts, the external forces 12 applied to the sensor being the same, and, as consequence, it influences the sensitivity and the full-scale value of the sensor itself.

The reflected light radiation also depends on the optical properties of the material used therein.

In particular, it is possible to increase or to decrease the variations in the reflected radiation, the applied external forces 12 (and consequently the sensitivity of the sensor) being the same, by modifying the optical and mechanical properties of the reflecting lower surface of the third resilient deformation-liable layer.

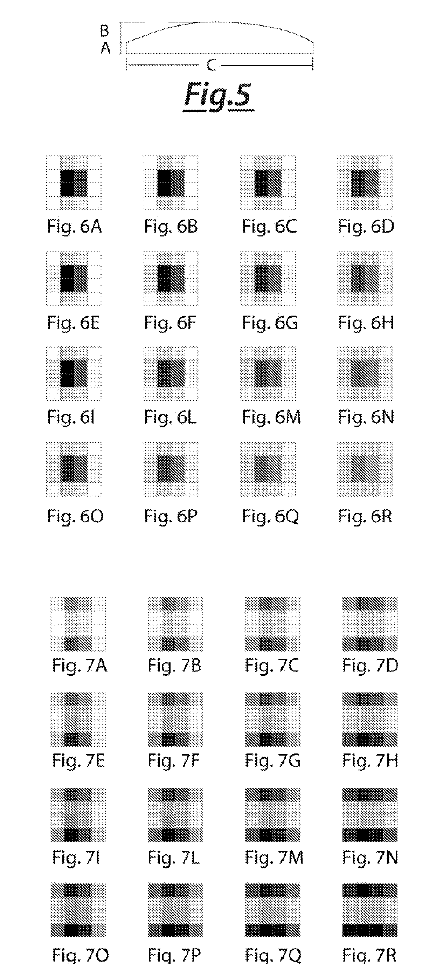

A variation of the third layer 3 of the sensor is illustrated in Figure 5.

Preferably, the cross-section of the third layer 3 is assimilable to that of a human finger, so that it can be utilised in anthropomorphic robotics applications in order to make the sensor adaptable to integration in robotic hands having dimension comparable to those of human hands.

Such cross-section is formed by a rectangle having the length of the reflecting surface of the sensor as its base C and a determined height A as its height and by an upper circular segment greater than said rectangle, defined by a cord having a length equal to said base C and a height B.

Once the material of said third layer 3 is chosen or selected , it is possible to model said third layer 3 by means of modelling techniques of any known type, such as for instance the finished item modelling techniques.

Let us analyse now the results obtained in terms of deformation of the reflecting bottom surface 6 of each cell 30, in the case in which silicone has been selected as the material for the third layer 3 and it has been decided to modify the value of both the parameter A and the parameter B in the range of 0 to 2 mm.

Such analysis has been carried out in the first place in the assumption of an external force 12 only applied in a perpendicular direction to the sensor and then in the assumption of an external force only applied in a parallel direction to the sensor,

Figures 6A-6R show the deformation amount of each cell 30, as calculated by the finished item model, in the assumption that only a normal force is applied to the sensor.

Figures 7A-7R show the deformation amount of each cell 30, as calculated by the finished item model, in the assumption that only a tangential force is applied to the sensor.

In each Figure 6A-6R and 7A-7R, the bottom surface 6 of each cell 30 is represented by a respective item of a 4 x 4 array.

In other words, each one of the sixteen cells 30 is an item of the 4 x 4 array of each Figure.

In particular:

- the 4 x 4 arrays as shown in Figures 6A-6D disclose what happens in the sixteen cells 30 of the third layer 3 in four different configurations of the third layer 3 when said parameter B is increased and said parameter A has a constant pre-established value;
- the 4 x 4 arrays as shown in Figures 6E-6H disclose what happens in the sixteen cells 30 of the third layer 3 in four different configurations of the third layer 3 when said parameter B is increased and said parameter A has a constant value, higher than the value of said parameter A selected for the 4 x 4 arrays of Figures 6A-6D;
- the 4 x 4 arrays as shown in Figures 6I-6N disclose what happens in the sixteen cells 30 of the third layer 3 in four different configurations of the third layer 3 when said parameter B is increased and said parameter A has a constant value, higher than the value of said parameter A selected for the 4 x 4 arrays of Figures 6E-6H;
- the 4 x 4 arrays as shown in Figures 6O-6R disclose what happens in the sixteen cells 30 of the third layer 3 in four different configurations of the third layer 3 when said parameter B is increased and said parameter A has a constant value, higher than the value of said parameter A selected for the 4 x 4 arrays of Figures 6I-6N.

In the assumption of an external force only acting perpendicularly to the sensor (Figures 6A-6R), the deformations only occur in one direction (negative deformations) and darker cells indicate greater deformations, the force being the same, and, therefore, a higher sensitivity of the sensor in the points corresponding to said darker cells.

In other words, each cell 30 has a more or less dark colour depending on whether it has undergone a more or less great lowering under action of the external force 12 applied to the sensor.

When the external force 12 only acts tangentially to the sensor (Figure 7A-7R), the deformations occur in both directions (positive and negative deformations).

Each 4 x 4 array as shown in Figures 7A-7R has the first and the second row indicating a negative deformation, while the third and the fourth row indicate a positive deformation. For each 4 x 4 array, the darker cells indicate deformations having a higher absolute value, the tangential force applied to the sensor being the same.

Said cells 30 have a more or less dark colour depending on whether they have undergone a deformation having a higher or a lower absolute value due to the external force 12 applied to the sensor.

Consequently, the presence of darker cells 30 in the first or in the second row of each 4 x 4 array indicates that said cells have undergone a greater negative deformation with respect to the lighter ones appearing in the same rows.

The presence of darker cells 30 in the third or in the fourth row of each 4 x 4 array indicates that said cells have undergone a greater positive deformation with respect to the lighter ones appearing in the same rows.

Therefore, both in the assumption of a positive deformation and in the assumption of a negative deformation, the presence of darker cells 30 in the first and in the second row of the 4 x 4 array together with the contemporaneous presence of darker cells 30 in the third and in the fourth row of said array indicates a higher sensitivity of the sensor in respect of a tangential force.

In particular:

- the 4 x 4 arrays as shown in Figures 7A-7D disclose what happens in the sixteen cells 30 of the third layer 3 in four different configurations of the third layer 3 when said parameter B is increased and said parameter A has a constant pre-established value;
- the 4 x 4 arrays as shown in Figures 7E-7H disclose what happens in the sixteen cells 30 of the third layer 3 in four different configurations of the third layer 3 when said parameter B is increased and said parameter A has a constant value, higher than the value of said parameter A selected for the 4 x 4 arrays of Figures 7A-7D;
- the 4 x 4 arrays as shown in Figures 7I-7N disclose what happens in the sixteen cells 30 of the third layer 3 in four different configurations of the third layer 3 when said parameter B is increased and said parameter A has a constant value, higher than the value of said parameter A selected for the 4 x 4 arrays of Figures 7E-7H;
- the 4 x 4 arrays as shown in Figures 7O-7R disclose what happens in the sixteen cells 30 of the third layer 3 in four different configurations of the third layer 3 when said parameter B is increased and said parameter A has a constant value, higher than the value of said parameter A selected for the 4 x 4 arrays of Figures 7I-7N.

By referring to Figures 6A-6R and 7A-7R, it can be observed that, as the values of parameters A and B are increased, the sensor becomes more sensitive in respect of the tangential components of the external force 12 applied thereto, and vice versa, namely a decrease in such parameters A and B increases the sensitivity of the sensor in respect of an external force applied along a direction normal to the sensor itself.

Therefore, the selection of parameters A and B depends on the sensor application type.

In the example just now described, the values of parameters A and B have been selected in their variation range (0 - 2 mm), so as to obtain a good sensitivity in respect of all components of the external force 12.

In a variation (not shown in the Figures), as concerns the application requiring that the second layer 2 be made of flexible material, said second layer can be integrally realised with the third layer 3, thereby obtaining a unique deformation-liable layer.

In a preferred embodiment, the first layer 1 is an electronic circuit and the sensing points 45 are opto-electronic components of commercial type.

Each light source 4 is a LED and each receiver 5 is a NPN phototransistor.

The emission spectrum of the LED and the sensitivity spectrum of the NPN phototransistor reach a maximum value at the same wave length, 850 nm. Both said LED and said phototransistor have the same standard package of 1.7 mm x 0.8 mm x 0.65 mm sizes.

The maximum emission angle of the LED matches the maximum reception angle of said NPN phototransistor and both angles are of $\pm 80°$.

The surface area of each sensing point 45, in the assumption of an emitter positioned side by side to the optical receiver, is slightly larger than 1.7 mm x 1.6 mm, in view of the package sizes.

Experimental measurements have evidenced that, aiming at realising a second layer 2 having a dull black colour, it is necessary that the second layer have a thickness of 500 $\mu$m in order to optically uncouple two neighbouring sensing points 45 and to absorb the light radiation reaching said second layer 2, at the operation wave length of the LED's and of the phototransistors.

The overall dimensions of the concerned sensor are about 8.9 mm x 9.3 mm.

The necessary additional electronics for utilising the sensor is comprised of only resistors.

In particular, for each NPN phototransistor, it is necessary to furnish a resistor connected between the power supply and the collector of said phototransistor, while the LED's can be all connected in a single set or they can be connected in groups, in more than one set, with addition of a further resistor aimed at fixing the current flowing in each set.

As a consequence, the strength variation of the light radiation incident on the NPN phototransistor is a function of the voltage variation as measured on the collector of said phototransistor.

The thickness of said second layer 2 is nearly the same as the height of the opto-electronic components, namely about 0.65 mm.

The walls 7 separating the cells 30 have a thickness of at least 500 $\mu$m (the same as the thickness of the second layer 2) and they are made of black silicone, in order to guarantee that the two neighbouring cells 30 are completely optically uncoupled, thereby absorbing the light radiation reaching such walls.

The bottom reflecting surface 6 of each cell 30 is made of white silicone in order to increase the strength of the reflected light radiation and consequently the sensitivity. In fact, the external applied force and the deformation being the same, a reflecting surface is capable to transmit a greater or a smaller light radiation amount depending on the material of which said reflecting surface is made as well as on the finish of said reflecting surface.

In such preferred embodiment, the starting distance 8 is of about 800 $\mu$m and therefore the full-scale value of said sensor is equal to 2N.

Experimental Measurements

Some experimental measurements will be discussed in this section, as carried out based upon the sensor realised according to the above mentioned preferred embodiment, in order to evidence the advantages thereof that can be achieved.

In the very first place, a reference system is set up in respect of which the positions of the sensing points 45 of the resulting sensor are defined.

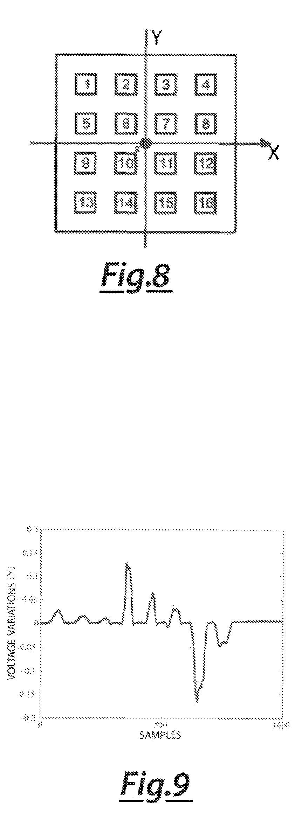

Figure 8 schematically shows the position of each of the sixteen cells 30 with respect to the reference axes.

The position of the k-th sensing point 45 can be defined by means of a pair of co-ordinates $(x_k, y_k)$ which refer to the centre point of the surface physically occupied by the emitter/receiver pair.

When an external force 12 is applied to the concerned sensor, the distance between the reflecting surface of the third resilient deformation-liable layer and the sensing points 45 can undergo both positive and negative local variations, as already above explained.

Such variations entail also variations in the light strength incident on the receivers 5 and as a consequence they entail variations in the voltage measured on the collector of each phototransistor.

By designating the voltage variations measured by each phototransistor as $C_k$, an increase of the distance between a sensing point 45 and the reflecting surface of the third layer 3 will be designated as $C_k > 0$, while a decrease of the distance between a sensing point 45 and the reflecting surface of the third layer 3 will be designated as $C_k < 0$.

It will be apparent that $C_k = 0$ means that there is no distance variation.

The sensing points 45 having a measure $C_k \neq 0$ furnish useful information relating to the estimation of the components of the external force 12 applied to the sensor.

In particular, the sensing points 45 having a voltage variation $C_k < 0$ furnish useful information not only relating to the estimation of the external force, but also relating to the estimation of the contact point or area between the external force and the sensor, regardless of whether said external force is normal or tangential to said sensor.

In contrast, the sensing points 45 having a measure $C_k > 0$ furnish useful information relating to the estimation of the tangential components of the external force 12 applied to the sensor.

As a consequence, the measures furnished by the phototransistors can be utilised for estimating at the same time the contact point/area as well as the components of the external force 12 acting on the sensor.

Figure 9 shows the samples of an experimental measurement of the voltage variations $C_k$ in connection with a sensing point 45 undergoing firstly positive variations and then negative variations.

Measures $C_k < 0$ can be utilised for estimating the contact point by different methods.

The experimental results obtained based upon two methods of known type will be reported herein after.

The first method is based upon the concept to approximate the position of the contact point with the co-ordinates $(x_k, y_k)$ of the sensing point 45 corresponding to the measured minimum value of $C_k$, namely

$$\begin{cases} \hat{x} = x_k \\ \hat{y} = y_k \end{cases} \quad k = \underset{h=1,\ldots,16}{\arg\min}(c_h)$$

where $(\hat{x}, \hat{y})$ are the estimated co-ordinates of the contact point.

The advantage of such first method surely is its simplicity, while the disadvantage is that the estimated position is limited to a discrete number of points coincident with the array of sensing points and therefore the estimation resolution depends on the relative distance between the concerned sensing points 45.

The proposed second method utilises the measures of the cells 30 having $C_k < 0$ for estimating the co-ordinates of the contact point.

$$\begin{cases} \hat{x} = \dfrac{\displaystyle\sum_{k=1}^{16} x_k F(c_k)}{\displaystyle\sum_{k=1}^{16} F(c_k)} \\[2em] \hat{y} = \dfrac{\displaystyle\sum_{k=1}^{16} y_k F(c_k)}{\displaystyle\sum_{k=1}^{16} F(c_k)} \end{cases}$$

where

$$F(c_k) = \begin{cases} c_k & \text{se} \quad c_k \le 0 \\ 0 & \text{se} \quad c_k > 0 \end{cases} \qquad k = 1,\ldots,16$$

This second method is based upon the concept of estimating the centroid of the contact area as defined by all cells having $C_k < 0$.

It enables estimating the contact point by overcoming the limitations of the first method in terms of resolution. Of course, the selection of the method to be used depends on the application of the sensor.

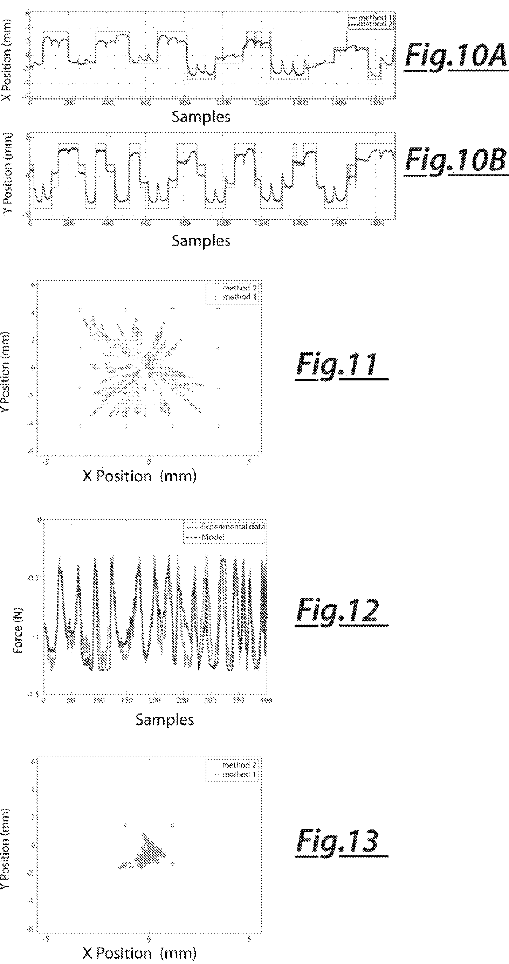

Figures 10A-10B show the graphs illustrating the experimental results obtained by means of the two proposed methods for estimating the co-ordinates of the contact points.

As regards position x and position y on the ordinate axis of the concerned graphs shown in Figures 10A and 10B, respectively, each of them indicates a co-ordinate of the contact point with respect to the centre point of the reference system of Figure 8.

The samples on the abscissa axis of such graphs relate to the number of measurements performed by an acquisition system for estimating the co-ordinates of the contact point, as plotted on the ordinate axis.

The estimation of the components of the external force applied to the sensor utilises all those cells having a value $C_k \ne 0$.

There are also multiple techniques that can be exploited to estimate the external force 12.

The results as herein set forth have been obtained by using an approach based upon neural networks for interpolating a sufficient amount of experimental data to model the relationship between the external forces applied to the sensor and the variations $C_k$ measured by the phototransistors.

The calibration of the sensor is carried out by mounting said sensor on a standard sensor consisting of a three axis load cell.

Various experiments are carried out by contemporaneously acquiring the voltage variations measured by the phototransistors and the components of the external force 12 acting on the sensor and that is measured by the load cell.

The acquired data should be sufficient to train the neural network and they are arranged as input data to the neural network (voltage variations) and output data from the neural network (force components). It should be underlined that the component of the external force 12 perpendicular to the upper surface of the third layer of the sensor mainly depends on the $C_k < 0$ measures substantially coinciding with the sensing points positioned under the contact area.

In contrast, the components of the external force 12 tangentially acting to the upper surface of the third layer of the sensor mainly depend on the $C_k > 0$ measures coinciding with sensing points that are contiguous with respect to the contact area.

This means that the estimation of the normal component of the external force can be accurate wherever the contact occurs on such surface, while the estimation of the tangential component becomes worse when the contact points move from the central zone of said surface, due to the fact that said central zone is lacking some sensing points 45 neighbouring the contact area.

Depending on the sensor application, therefore, it is possible to calibrate said surface of the sensor if it is desired only to estimate the normal component, while it is possible to calibrate the central zone on the sensor for estimating both the normal and the tangential components of the external force.

Figures 11 and 12 illustrate the experimental results of a calibration step carried out in connection with the upper surface of the third layer of the sensor, by applying to the sensor only forces perpendicular to the sensor surface.

The above forces have been applied by means of a member provided with a spherical shape point and having small dimensions with respect to the surface of the sensor to which they are applied.

In particular, Figure 11 shows the positions of the estimated contact point, by performing both above described methods. It can be noted that the experiment has been carried out by covering the whole surface of the sensor.

Figure 12 shows the calibration results and illustrates the comparison between the measured normal force and the one estimated by means of a neural network based model.

Figures 13, 14, 15 and 16 illustrate the experimental results relating to a calibration step performed in respect of the central zone of the sensor, by applying to it forces having both perpendicular and tangential components to the sensor surface.

In particular, Figure 13 illustrates the estimation of the contact position by following the above proposed methods. It can be noted that, in this second instance, the zone involved in the application of said forces is limited to the four sensing points positioned at the sensor centre.

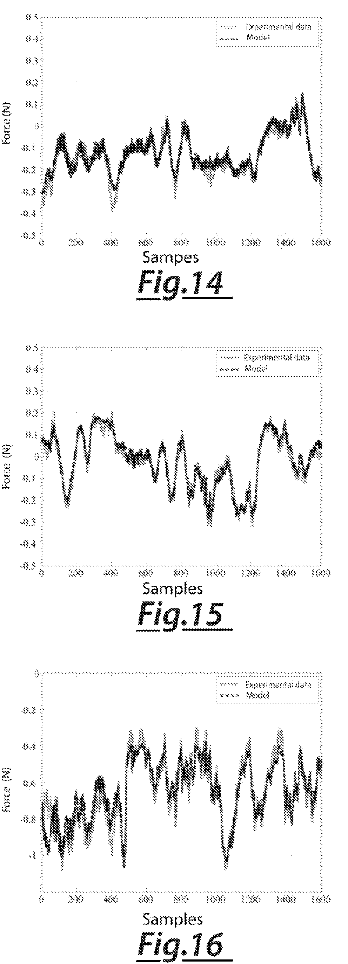

Turning now to the reference system in Figure 8, the tangential component of the force acting along axis x is plotted in Figure 14, while the tangential component acting along axis y is plotted in Figure 15.

Figure 16 illustrates the normal component of the force applied to the sensor.

The latter three Figures illustrate all of the spatial components of the external force applied to the sensor as well as the experimental measure compared to the estimated value as obtained by the model based upon the neural network.

Furthermore, the latter three figures evidence that the sensor according to this invention is adapted to solve the problem of estimating all of the components of the external force applied to the sensor itself.

Advantageously, as already mentioned, the light radiation emitted by a light source 4 propagates in the air, in contrast with conventional sensors where it propagates in a transparent material. This results in absence of any stochastic phenomenon (such as scattering) and this, in turn, in the first place, simplifies modelling and consequently calibration of the sensor and, in the second place, assures accurate and above all repeatable measurements.

As a second advantage, the sensor according to this invention enables to estimate the external force 12 applied to the sensor in all spatial directions, both in terms of components acting parallel to the sensor - as it is indispensable in certain applications (for instance in handling objects) - and in terms of components acting perpendicularly to the sensor.

As a third advantage, it is possible to utilise any information furnished by the sensor in regard of the cell deformation, in order to estimate the three components of a moment applied to the sensor.

A fourth advantage is connected with the sensor being capable to furnish a pressure map extended to its dimensions.

As a further advantage, it is possible to utilise any information furnished by said sensing points 45 measuring a negative deformation, in view of the fact that this permits to directly estimate the contact point or area.

Yet a further advantage is connected with the possibility to obtain, by means of said sensing points 45, a pressure map that is a direct function of the negative and positive deformations of the individual cells 30 as well as of the capability of the sensor to estimate multiple contact points.

Further advantages of the sensor are connected with the fact that it can be easily manufactured and this also allows the costs to be reduced. In fact, an easy manufacturing based on commercially available components makes the integration simple and economically convenient for all applications requiring sensitive layers having very different dimensions.

For instance, said first layer 1 can be made of a flexible material (for instance polyamide, when it is realised by electronic components) and therefore the sensor can be easily conformed to surfaces of any type.

As far as sensing points 45 are concerned, for instance, commercially available and therefore low cost components can be employed. Moreover, such sensing points can operate at low power and with a simple, less cumbersome additional conditioning electronics, which consequently entails low additional costs.

The present invention has been described by way of illustration and not by way of limitation, according to a preferred embodiment thereof, but it should be understood that variations and/or modifications can be made by persons skilled in the art, without so departing from the protection scope thereof, as defined by the following claims.

In particular the work resulting into this invention has been financed by the European Community in the context of the Seventh Framework Programme [FP7/2007-2013], Project DEXMART - Contract No. 216239.

**Claims**

1. Sensor for measuring a force and/or a moment, comprising:

> - multiple sensing points (45), each of which comprises a light source or emitter (4) and a corresponding optical receiver (5); and

- a resilient deformation-liable element (3) having a reflecting lower surface facing said sensing points (45) and an upper surface facing the external environment, adapted to optically uncouple said sensing points (45) and to absorb the light radiation emitted by said light source (4) and reflected by said reflecting lower surface, **characterised in that** said sensing points (45) are at least four sensing points, at least two of which are arranged in a first row and at least two of which are arranged in a second row, and **in that** said resilient deformation-liable element (3) comprises multiple deformation-liable cells (30), each of which contains a sensing point (45) respectively and is defined by deformation-liable walls (7) extending from said reflecting lower surface and by a deformation-liable bottom surface (6) that is a portion of said lower reflecting surface, so that, when an external force and/or a moment are applied to said sensor, the walls (7) and/or the bottom surface (6) of the cells (30) are deformed, such that, in respect of each cell, said optical receiver (5) senses a variation in the strength of the light radiation emitted by the light source (4) respectively and the sensor estimates the components of said external force and/or of said moment from the variations of the light strength of all above said cells (30).

2. Sensor according to claim 1, **characterised in that** each of said cells (30) has an inverted "U" shaped cross-section, consisting of two vertical sides and of a horizontal side, wherein each vertical side is orthogonal to the horizontal side.

3. Sensor according to any one of the preceding claims, **characterised in that** said multiple sensing points (45) are arranged in an array.

4. Sensor according to any one of claims 1 to 3, **characterised in that** each light source (4) is coupled to the corresponding optical receiver (5).

5. Sensor according to any one of claims 1 to 3, **characterised in that** each light source (4) is placed at such a distance from the corresponding optical receiver (5) that it is at most equal to 50% the sum of the largest dimensions of the light source (4) and of the receiver (5).

6. Sensor according to any one of claims 1 to 5, **characterised in that** said sensing points (45) are positioned on a support (1).

7. Sensor according to any one of claims 1 to 5, **characterised in that** said sensing points (45) are integrated in a support (1).

8. Sensor according to any one of the preceding claims, **characterised in that** the walls (7) of said cells (30) have a colour and a thickness such as to optically insulate each sensing point (45).

9. Sensor according to any one of the preceding claims, **characterised in that** said reflecting lower surface of said resilient deformation-liable element (3) is realised in white silicone.

10. Sensor according to any one of the preceding claims, **characterised in that** it comprises a further element (2), to be interposed between said sensing points (45) and said resilient deformation-liable element (3), that co-operates with said resilient deformation-liable element (3) in optically insulating said sensing points (45) and in absorbing the light radiation emitted by said light source (4) and reflected by said reflecting lower surface; said further element (2) being provided with an opening or window (20) for each of said sensing points (45) in order to permit said sensing points (45) to pass there through.

11. Sensor according to claim 10, **characterised in that** said further element (2) is rigid, preferably made of resin, or it is flexible, preferably made of silicone.

12. Sensor according to claim 10 or 11, **characterised in that** said further element (2) is dull black coloured.

_Fig.1_

_Fig.2_

*Fig.3*

*Fig.4A*

*Fig.4B*

**_Fig.5_**

Fig. 6A  Fig. 6B  Fig. 6C  Fig. 6D

Fig. 6E  Fig. 6F  Fig. 6G  Fig. 6H

Fig. 6I  Fig. 6L  Fig. 6M  Fig. 6N

Fig. 6O  Fig. 6P  Fig. 6Q  Fig. 6R

Fig. 7A  Fig. 7B  Fig. 7C  Fig. 7D

Fig. 7E  Fig. 7F  Fig. 7G  Fig. 7H

Fig. 7I  Fig. 7L  Fig. 7M  Fig. 7N

Fig. 7O  Fig. 7P  Fig. 7Q  Fig. 7R

_**Fig.8**_

_**Fig.9**_

_**Fig.10A**_

_**Fig.10B**_

_**Fig.11**_

_**Fig.12**_

_**Fig.13**_

**_Fig.14_**

**_Fig.15_**

**_Fig.16_**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0113223 A
- JP 6018216 B
- JP 60195431 B
- JP 61041938 B
- WO 00073982 A
- WO 86003618 A
- WO 09013599 A
- US 4405197 A
- EP 0558871 A
- DE 10233512
- EP 2034287 A
- DE 3146152

**Non-patent literature cited in the description**

- **AKIRA ISHIMANU.** Wave propagation and scattering in random media. Academic Press, 1978